Europäisches Patentamt

European Patent Office

Office européen des brevets

(19)

(11) Numéro de publication : **0 012 669**
**B1**

# (12) FASCICULE DE BREVET EUROPÉEN

(45) Date de publication du fascicule du brevet :
**11.11.81**

(51) Int. Cl.³ : **F 16 H 55/36, F 16 D 3/58**

(21) Numéro de dépôt : **79400966.2**

(22) Date de dépôt : **04.12.79**

(54) **Dispositif d'entraînement par poulie.**

(30) Priorité : **06.12.78 FR 7834403**

(43) Date de publication de la demande :
**25.06.80 (Bulletin 80/13)**

(45) Mention de la délivrance du brevet :
**11.11.81 Bulletin 81/45**

(84) Etats contractants désignés :
**DE GB IT**

(56) Documents cités :
**FR - A - 2 176 335**
**FR - A - 2 319 804**
**FR - A - 2 371 603**
**US - A - 2 475 800**

(73) Titulaire : **SOCIETE ANONYME AUTOMOBILES CITROEN**
**117 à 167, Quai André Citroen**
**F-75747 Paris Cedex 15 (FR)**

**AUTOMOBILES.PEUGEOT**
**75, avenue de la Grande Armée**
**F-75116 Paris (FR)**

(72) Inventeur : **Beroff, Jacques Andre**
**6, Allée des Pins**
**F-78350 Jouy-en-Josas (FR)**

(74) Mandataire : **Michardière, Bernard et al**
**Cabinet Plasseraud 84, rue d'Amsterdam**
**F-75009 Paris (FR)**

EP 0 012 669 B1

Imprimerie Jouve, 17, rue du Louvre, 75001 Paris, France

Dispositif d'entraînement par poulie

L'invention est relative à un dispositif d'entraînement par poulie du genre de ceux qui comprennent une poulie munie d'un voile comportant un manchon monté libre en rotation sur un arbre, menant ou mené, tandis que des moyens élastiques de liaison, formés par des blocs de matière élastique travaillant en cisaillement, sont prévus pour transmettre le couple de rotation entre l'arbre et la poulie ou inversement, les surfaces périphériques externe et interne des blocs de matière élastique étant reliées en rotation, respectivement au voile de la poulie et à l'arbre ou inversement.

L'invention concerne plus particulièrement, mais non exclusivement, un dispositif d'entraînement par poulie destiné à un moteur à combustion interne, la poulie étant entraînée en rotation par un arbre du moteur et transmettant le mouvement de rotation, par une courroie, à un autre organe.

Un dispositif de ce genre est connu, notamment par le brevet FR. n° 1 396 443. Un tel dispositif permet une filtration des phénomènes vibratoires et un amortissement des pulsations du couple grâce aux moyens élastiques de liaison, tout en assurant une concentricité d'entraînement durable, en dépit des efforts radiaux de tension développés par la courroie enroulée par la poulie, du fait qu'il est possible de prévoir, pour le manchon, une portée à grande surface. Toutefois, le dispositif proposé par le brevet français cité précédemment présente un encombrement axial relativement important ; en outre, la répartition des points d'application des efforts par rapport aux portées demande à être améliorée.

On connaît, par ailleurs, d'après la demande de brevet FR. n° 2 319 804 un dispositif d'entraînement par poulie à encombrement axial réduit ; toutefois, la poulie est montée sur un élément élastique intermédiaire qui, tout en étant relativement rigide dans le sens radial, ne peut assurer une concentricité d'entraînement aussi bonne que celle obtenue avec un manchon rigide monté libre en rotation sur un arbre.

On connaît, enfin, par la demande de brevet FR. n° 2 371 603, un accouplement à torsion dans lequel la transmission du couple s'effectue entre un plateau moteur et un plateau mené avec une bonne concentricité d'entraînement puisqu'aucun élément élastique déformable n'intervient pour l'établissement de cette concentricité. La transmission du couple entre les deux plateaux est assurée par des éléments d'accouplement élastiques travaillant en flexion et en cisaillement entre deux plans parallèles, perpendiculaires à l'axe de rotation de l'accouplement et espacés l'un de l'autre. Lorsque l'accouplement transmet un couple suffisant pour provoquer la déformation des éléments d'accouplement élastiques, du fait du mode de travail de ces éléments, une réaction orientée parallèlement à l'axe de rotation de l'ensemble apparaît entre le plateau moteur et le plateau mené. Cette réaction exerce sur les deux plateaux un effort tendant à les déplacer l'un par rapport à l'autre, suivant la direction axiale.

La présente invention a pour but de remédier aux inconvénients évoqués ci-dessus, et de fournir un dispositif d'entraînement par poulie du genre en question tel que sa compacité axiale soit réduite et que la répartition des points d'application des efforts soit meilleure, tout en conservant une bonne concentricité d'entraînement sans apparition de réaction sensible suivant la direction axiale.

Selon l'invention, un dispositif d'entraînement par poulie du genre défini précédemment, est caractérisé par le fait que le voile de la poulie a une section transversale concave de manière à former un réceptacle annulaire qui s'étend de part et d'autre du plan moyen de la poulie et qui est compris sensiblement entre les mêmes limites axiales que le susdit manchon, lequel limite radialement vers l'intérieur ou vers l'extérieur ledit réceptacle, et que les susdits moyens élastiques de liaison sont disposés à l'intérieur de ce réceptacle annulaire.

De préférence, ce réceptacle est compris dans l'épaisseur axiale de la poulie.

Avantageusement, la section transversale du voile de la poulie a sensiblement la forme d'un C, la branche de ce C la plus proche de l'arbre formant la paroi du susdit manchon.

Généralement, les susdites surfaces externe et interne, des blocs de matière élastique, sont liées, notamment par adhésion ou collage, à une partie de pièce engagée, suivant le sens axial, dans ledit réceptacle annulaire, cette pièce comportant une autre partie recourbée dans un plan sensiblement perpendiculaire à l'axe de la poulie et située hors dudit réceptacle, cette partie recourbée étant liée en rotation de manière démontable soit au voile de la poulie, soit à l'arbre, les blocs de matière élastique (ou blocs élastiques) et les susdites pièces liées à ces blocs formant un moyeu d'accouplement élastique.

Selon une première possibilité, la surface externe périphérique de chaque bloc élastique est liée à une pièce associée à ce bloc et reliée, de manière démontable, au voile de la poulie, tandis que les surfaces périphériques internes des blocs élastiques sont reliées à une seule pièce formant boîtier entourant l'arbre et reliée en rotation à cet arbre ; les pièces solidaires des surfaces externes des blocs élastiques font alors saillie, hors du réceptacle annulaire, du côté de ce réceptacle ouvert suivant le sens axial, et la pièce liée aux surfaces internes des susdits blocs fait saillie hors du réceptacle du même côté.

Les pièces liées aux surfaces externes des blocs élastiques ont avantageusement la forme d'étriers métalliques comportant des butoirs bilatéraux surbaissés, tandis que la pièce liée aux surfaces internes des blocs comporte des tocs en saillie, répartis régulièrement entre les susdits butoirs, ces tocs étant flanqués sur les deux côtés de butées élastiques propres à coopérer avec les susdits butoirs pour limiter l'amplitude de la rotation relative autorisée, entre la poulie et l'arbre, par le travail en cisaillement des blocs élastiques.

Selon une autre possibilité, la surface périphérique interne de chaque bloc élastique est liée à une pièce associée à ce bloc, lesdites pièces étant reliées en rotation au voile de la poulie, ces pièces traversant des ouvertures, prévues dans le voile, pour faire saillie, hors du réceptacle, du côté opposé à celui ouvert dans le sens axial, la surface externe des blocs élastiques étant liée en rotation à la surface interne de la partie d'une pièce, formant boîtier, liée en rotation à l'arbre, cette pièce comportant des tocs flanqués bi-latéralement de butées élastiques propres à coopérer avec des butoirs prévus sur les susdites pièces liées aux surfaces internes des blocs élastiques.

L'invention consiste, mises à part les dispositions exposées ci-dessus, en certaines autres dispositions dont il sera plus explicitement question ci-après à propos de modes de réalisation particuliers décrits en détail avec référence aux dessins ci-annexés, mais qui ne sont nullement limitatifs.

La figure 1, de ces dessins, est une coupe suivant I-I figure 2 d'un dispositif d'entraînement par poulie conforme à l'invention.

La figure 2 est une demi-vue de gauche, par rapport à la figure 1, du moyeu d'accouplement élastique.

La figure 3 est une coupe suivant III-III figure 4.

La figure 4, enfin, est une vue suivant IV-IV, figure 3, de ce dispositif d'entraînement.

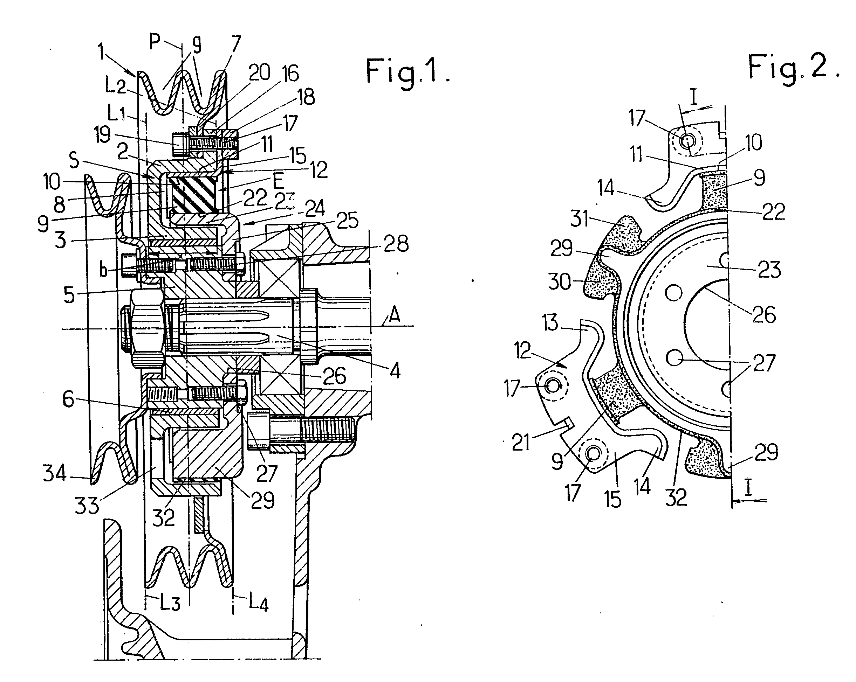

En se reportant aux dessins, plus particulièrement aux figures 1 et 2, on peut voir un dispositif d'entraînement comprenant une poulie 1 munie d'un voile 2 comportant un manchon 3 monté libre en rotation sur un arbre 4 menant ou mené.

Le manchon 3 est monté sur cet arbre 4 par l'intermédiaire d'un moyeu intérieur 5 accouplé solidaire en rotation de l'extrémité de l'arbre 4 par tout moyen approprié, notamment par des cannelures normalisées comme représenté sur le dessin. Ce moyeu intérieur 5 est, en outre, bloqué axialement par rapport à l'arbre 4.

Un coussinet de friction 6, emmanché à frottement doux sur le moyeu intérieur 5, est interposé entre ce dernier et le manchon 3.

Des moyens élastiques de liaison E sont prévus pour transmettre le couple de rotation entre l'arbre 4 et la pulie 1 ou inversement. Par la suite, on considérera que l'arbre 4 est moteur, mais les explications données s'appliquent aussi bien au cas où l'arbre 4 serait entraîné par la poulie 1.

La poulie 1 comporte une jante 7 sur laquelle sont prévues une ou plusieurs gorges g, (deux gorges dans l'exemple représenté sur la figure 1) destinées à recevoir une courroie (non montrée) pour la transmission du mouvement de rotation à un autre organe.

Le voile 2 de la poulie a une section transversale S concave, de manière à former un réceptacle 8 annulaire qui s'étend de part et d'autre du plan moyen P de la poulie. Le voile 2 forme donc, en quelque sorte, un voile tambour.

Par section transversale S on désigne une section du voile 2 par un plan passant par l'axe A de la poulie 1 et de l'arbre 4. Le plan moyen P de la poulie est perpendiculaire à cet axe A et est équidistant des bords extrêmes de la poulie 1.

Le réceptacle 8 est compris sensiblement entre les mêmes limites axiales L1, L2 que le manchon 3. Dans le cas du mode de réalisation de la figure 1, le manchon 3 limite radialement vers l'intérieur le réceptacle 8. Les limites axiales L1, L2 sont formées par des plans perpendiculaires à l'axe A et tangents aux extrémités du manchon 3.

Les moyens élastiques de liaison E sont disposés à l'intérieur du réceptacle 8 ; ce dernier est compris, de préférence, dans l'épaisseur axiale de la poulie c'est-à-dire que le réceptacle 8 est situé entre les plans limites L3, L4, perpendiculaires à l'axe A et tangents aux bords de la poulie.

Comme visible sur la figure 1, la section transversale du voile 2 a sensiblement la forme d'un C dont la concavité s'ouvre axialement, dans le cas de la figure 1 vers la droite. La branche de ce C la plus proche radialement de l'arbre 4 forme la paroi du manchon 3.

Les moyens élastiques de liaison E sont formés par des blocs 9 de matière élastique, notamment de matière élastomère, travaillant en cisaillement. La surface périphérique externe 10 de chaque bloc est liée, notamment par adhérisation ou collage, à une partie 11, engagée suivant le sens axial dans le réceptacle 8, d'une pièce 12 en forme d'étrier métallique (voir fig. 2) comportant des butoirs 13, 14, bi-latéraux surbaissés.

Chaque pièce ou étrier 12 comporte une autre partie 15 recourbée dans un plan perpendiculaire à l'axe A et située hors du réceptacle 8 comme visible sur la figure 1. Cette partie recourbée 15 vient en appui axial contre un rebord périphérique extérieur 16, du voile 2, situé dans un plan perpendiculaire à l'axe A.

Deux trous 17 taraudés sont prévus dans chaque pièce 15 au voisinage de ses bords radiaux ; ces trous 17 se prolongent dans des blocs 18 solidaires de la partie 15 ; le rebord 16 comporte des trous propres à venir en regard de ces trous 17. La fixation de la pièce 15 sur le rebord 16 est assurée par des vis 19 engagées dans les trous taraudés 17. Ces vis 19 traversent les trous prévus dans le rebord 16 de manière à bloquer axialement l'ensemble. La jante 7 de la poulie forme partie intégrante avec une couronne ou partie de couronne 20, située dans un plan perpendiculaire à l'axe A, et qui est munie de trous propres à venir en regard des trous 17 et de ceux du rebord 16 ; les vis 19 assurent également le blocage de cette couronne 20 et de la jante 7 sur le voile 2.

Chaque partie 15, comme visible sur la figure 2, comporte sur son bord périphérique extérieur une languette 21 découpée suivant deux côtés parallèles et rabattue suivant un plan perpendiculaire à la partie 15 de manière à coopérer avec une échancrure (non visible) prévue dans le bord périphérique du rebord 16 afin d'assurer un positionnement correct des étriers 12 par rapport au voile 2.

Les surfaces périphériques internes 22 des blocs élastiques 9 sont liées à la partie 23 d'une pièce 24 formant boîtier, engagée axialement dans le réceptacle 8. Cette pièce 24 comporte une partie 25 recourbée dans un plan perpendiculaire à l'axe A et située hors du réceptacle 8 ; cette partie 25 comporte un trou central 26 destiné à être engagé autour d'une portée cylindrique de centrage du moyeu intérieur 5, comme visible sur la figure 1. Des trous 27, pour le passage de vis 28 de fixation sur ce moyeu intérieur 5, sont régulièrement répartis autour du trou central 26.

La partie 23, de la pièce 24, a une forme cylindrique et comporte des tocs 29 (c'est-à-dire des protubérances) faisant saillie radialement vers l'extérieur, régulièrement répartis entre les butoirs 13, 14, des étriers 12. Chaque toc 29 est flanqué, sur les deux côtés, d'une butée élastique 30, 31, propre à coopérer avec les susdits butoirs 13, 14 pour limiter l'amplitude de la rotation autorisée entre la poulie et l'arbre 4, par le travail en cisaillement des blocs 9.

Avantageusement, les blocs 9 et les butées élastiques 30, 31, sont réunis à une enveloppe 32, de plus faible épaisseur, en même matière élastomère, qui entoure complètement la périphérie de la pièce 23, et qui est adhérisée ou collée sur cette pièce.

Des ouvertures 33 (fig. 1) peuvent être prévues avec une répartition régulière suivant la circonférence dans la paroi du voile 2 perpendiculaire à l'axe A.

On conserve la possibilité d'entraîner une poulie auxiliaire 34 par une liaison rigide avec le moyeu intérieur 5 lorsqu'un tel entraînement direct n'est pas concerné par les problèmes de filtration de phénomènes vibratoires ou de pulsation de couple.

Ainsi, selon l'invention, les moyens élastiques E sont imbriqués dans le voile tambour 2. L'encombrement axial de l'ensemble est réduit. On peut, cependant, donner au coussinet 6 une longueur axiale *b* suffisamment grande pour garantir le maintien de la concentricité et l'absorption de l'effort radial unilatéral développé par la tension des courroies enroulées sur la poulie 1.

Cet effort radial est sensiblement situé dans le plan moyen P de la poulie ; du fait que le manchon 3 assurant le montage en rotation de la poulie s'étend de part et d'autre de ce plan moyen P, on réduit pratiquement à une valeur nulle de décalage, suivant l'axe A, entre d'une part l'effort radial exercé par les courroies sur la poulie 1 et, d'autre part, la réaction du manchon 3 et du coussinet 6 sur le moyeu 5 et l'arbre 4 ; l'ensemble est donc soumis à un moment de flexion réduit.

Les blocs élastiques 9 assurent la transmission du mouvement de rotation en filtrant les vibrations et en amortissant les pulsations du couple.

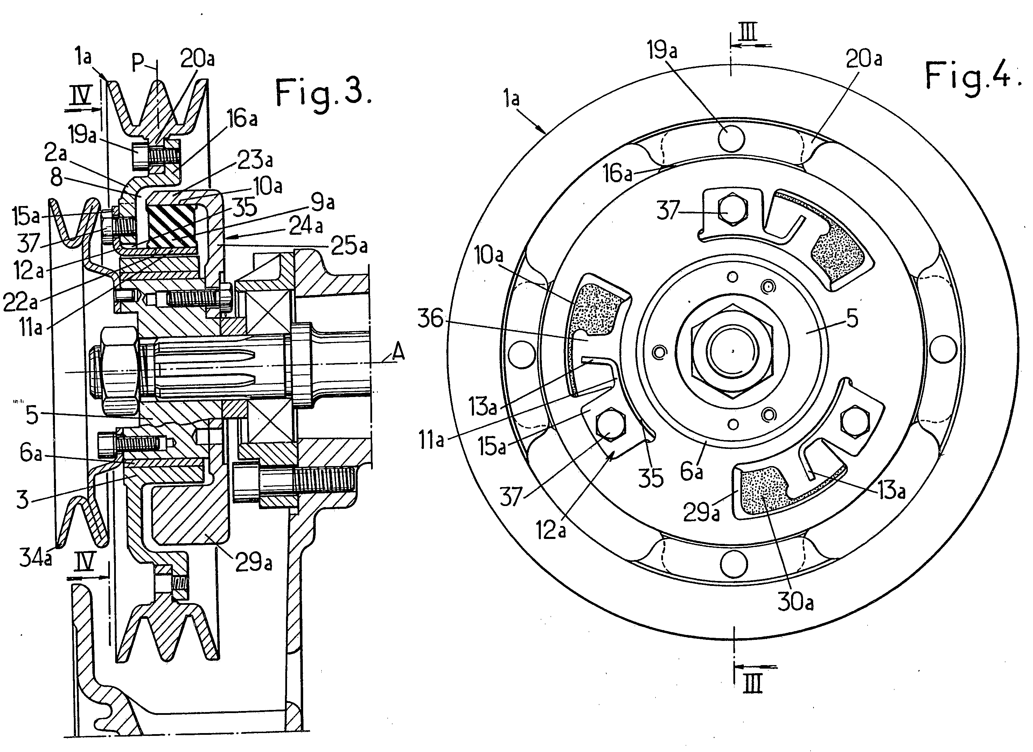

En se reportant aux figures 3 et 4, on peut voir un second mode de réalisation dans lequel on a désigné par les mêmes références numériques, éventuellement suivies de la lettre a, des éléments identiques ou ayant des rôles semblables à des éléments déjà décrits avec référence aux figures 1 et 2 ; la description détaillée de tels éléments n'est pas reprise.

Les blocs élastiques 9a ont leur surface périphérique externe 10a liée, par adhérisation ou collage, à la surface interne de la partie 23a d'une pièce 24a formant boîtier, engagée axialement dans le réceptacle 8. Cette pièce 24a comporte une partie 25a recourbée dans un plan perpendiculaire à l'axe A et située à l'extérieur du réceptacle 8 ; cette partie 25a est fixée par des vis sur le moyeu intérieur 5.

La pièce 24a porte des tocs 29a faisant saillie radialement vers l'intérieur, flanqués, bilatéralement, de butées élastiques telles que 30a.

La surface périphérique interne 22a de chaque bloc 9a est liée à la partie 11a, engagée dans le réceptacle 8, d'une pièce 12a associée au bloc 9a considéré. Chaque pièce 12a traverse une ouverture 35, prévue dans la paroi du voile 2a (ou voile tambour) perpendiculaire à l'axe A, pour faire saillie hors du réceptacle 8 par la partie recourbée 15a située dans un plan perpendiculaire à l'axe A. Les ouvertures 35 débouchent dans des fenêtres 36 (fig. 4) du voile 2a pour permettre l'introduction de la partie 11a dans le réceptacle 8. Cette partie 11a est flanquée de chaque côté, suivant le sens périphérique, par des butoirs tels que 13a, propres à coopérer avec les butées élastiques 30a pour limiter l'amplitutde de la rotation relative de la poulie par rapport à l'arbre 4, autorisée par le travail en cisaillement des blocs 9a.

Les pièces 12a sont fixées sur le voile 2a par des vis 37 traversant des trous prévus dans les parties 15a en appui contre la face extérieure de la paroi du voile 2a perpendiculaire à l'axe A.

On peut noter que le rebord périphérique extérieur 16a du voile 2a ne s'étend que suivant des arcs de cercles répartis régulièrement, mais ne s'étend pas suivant toute la circonférence. De même, la partie 20a de la jante de la poulie 1a ne s'étend que suivant des arcs de couronne circulaire correspondant à ceux du rebord 16a ; ces parties 20a sont fixées sur ledit rebord par les vis 19a.

Il est clair que le mode de réalisation des figures 3 et 4 présente, également, les avantages évoqués à propos du mode de réalisation des fig. 1 et 2.

On peut remarquer, enfin, au sujet des fig. 3 et 4, qu'il serait possible de réaliser un transfert de la portée tournante au niveau de la périphérie externe de la partie 23a de la pièce 24a. Dans ce cas, le manchon 3, formant portée tournante, serait transféré radialement vers l'extérieur au niveau de la branche supérieure du C du voile 2a de manière à porter sur la surface extérieure de la partie 23a. La branche du C la plus proche de l'arbre 4 dans le sens radial pourrait alors être supprimée de telle sorte que le voile 2a aurait alors une section transversale en forme de L. Le manchon 3 limiterait alors radialement vers l'extérieur le réceptacle 8.

**Revendications**

1. Dispositif d'entraînement par poulie comprenant une poulie (1, 1a) munie d'un voile (2, 2a) comportant un manchon (3) monté libre en rotation sur un arbre (4), menant ou mené, tandis que des moyens élastiques de liaison (E), formés par des blocs (9, 9a) de matière élastique travaillant en cisaillement sont prévus pour transmettre le couple de rotation entre l'arbre (4) et la poulie (1, 1a) ou inversement, les surfaces périphériques externe (10, 10a) et interne (22, 22a) des blocs (9, 9a) de matière élastique étant reliées en rotation, respectivement au voile (2, 2a) de la poulie (1, 1a) et à l'arbre (4) ou inversement, caractérisé par le fait que le voile (2, 2a) de la poulie a une section transversale (S) concave de manière à former un réceptacle annulaire (8) qui s'étend de part et d'autre du plan moyen (P) de la poulie et qui est compris sensiblement entre les mêmes limites axiales (L1, L2) que le susdit manchon (3), lequel limite radialement vers l'intérieur ou vers l'extérieur ledit réceptacle (8) et que les susdits moyens élastiques de liaison (E) sont disposés à l'intérieur de ce réceptacle annulaire.

2. Dispositif selon la revendication 1, caractérisé par le fait que le réceptacle (8) est compris dans l'épaisseur axiale de la poulie (1, 1a).

3. Dispositif selon l'une quelconque des revendications précédentes, caractérisé par le fait que la section transversale (S) du voile (2, 2a) de la poulie a sensiblement la forme d'un C, la branche de ce C, la plus proche de l'arbre, formant la paroi du susdit manchon.

4. Dispositif selon l'une quelconque des revendications précédentes, caractérisé par le fait que les susdites surfaces externe (10, 10a) et interne (22, 22a) sont liées, notamment par adhérisation ou collage, à une partie (11, 23a ; 23, 11a) de pièce engagée, suivant le sens axial, dans ledit réceptacle annulaire, cette pièce comportant une autre partie (15, 15a ; 25, 25a) recourbée dans un plan sensiblement perpendiculaire à l'axe de la poulie et située hors dudit réceptacle, cette partie recourbée étant liée en rotation de manière démontable soit au voile de la poulie, soit à l'arbre, les blocs de matière élastique et les susdites pièces liées à ces blocs formant un moyeu d'accouplement élastique.

5. Dispositif selon la revendication 4, caractérisé par le fait que la surface externe périphérique (10) de chaque bloc élastique (9) est liée à une pièce (12) associée à ce bloc et reliée, de manière démontable, au voile (2) de la poulie, tandis que les surfaces périphériques internes (22) des blocs élastiques sont reliées à une seule pièce (24) formant boîtier entourant l'arbre (4) et reliée en rotation à cet arbre, lesdites pièces (12) solidaires des surfaces externes des blocs élastiques faisant saillie, hors du réceptacle (8) annulaire, du côté de ce réceptacle ouvert suivant le sens axial, tandis que la pièce (24) liée aux surfaces internes (22) des susdits blocs fait saillie hors du réceptacle du même côté.

6. Dispositif selon la revendication 5, caractérisé par le fait que les pièces (12) liées aux surfaces externes (10) des blocs élastiques ont la forme d'étriers métalliques comportant des butoirs bilatéraux (13, 14) surbaissés, tandis que la pièce (24) liée aux surfaces internes (22) des blocs comporte des tocs (29) en saillie, répartis régulièrement entre les susdits butoirs, ces tocs étant flanqués sur les deux côtés de butées élastiques (30, 31) propres à coopérer avec les susdits butoirs pour limiter l'amplitude de la rotation relative autorisée, entre la poulie et l'arbre, par le travail en cisaillement des blocs élastiques (9).

7. Dispositif selon la revendication 4, caractérisé par le fait que la surface périphérique interne (22a) de chaque bloc élastique (9a) est liée à une pièce (12a) associée à ce bloc, lesdites pièces (12a) étant reliées en rotation au moyeu (2a) de la poulie, ces pièces traversant des ouvertures (35), prévues dans le moyeu, pour faire saillie hors du réceptacle, la surface externe (10a) des blocs élastiques (9a) étant liée en rotation à la surface interne de la partie (23a) d'une pièce (24a), formant boîtier, liée en rotation à l'arbre, cette pièce comportant des tocs (29a) flanqués bi-latéralement de butées élastiques (30a) propres à coopérer avec des butoirs (13a) prévus sur les susdites pièces (12a) liées aux surfaces internes des blocs élastiques.

**Claims**

1. A drive mechanism comprising a pulley (1, 1a) provided with a disc (2, 2a) comprising a bush (3) which is mounted to be freely rotatable on a driving or driven shaft (4), while elastic connecting means (E) in the form of blocks (9, 9a) of elastic material operating in shear are provided to transmit the rotary torque between the shaft (4) and the pulley (1, 1a), or vice versa, the outer peripheral surfaces (10, 10a) and the inner peripheral surfaces (22, 22a) of the blocks (9, 9a) of elastic material being connected for rotation to the pulley disc (2, 2a) and to the shaft (4) respectively, or vice versa, characterised in that the pulley disc (2, 2a) has a concave cross-section (S) so as to form an annular receptacle (8) which extends on either side of the central plane (P) of the pulley and which is contained substantially between the same axial limits (L1, L2) as the said bush (3), which radially limits the said receptacle (8) towards the interior or the exterior, and the said elastic connecting means (E) are disposed inside said annular receptacle.

2. A mechanism according to claim 1, characterised in that the receptacle (8) is contained inside the axial thickness of the pulley (1, 1a).

3. A mechanism according to either of the preceding claims, characterised in that the cross-section (S) of the pulley disc (2, 2a) is substantially in the form of a C, of which the arm closest to the shaft forms the wall of the said bush.

4. A mechanism according to any of the preceding claims, characterised in that the said outer surfaces (10, 10a) and inner surfaces (22, 22a) are connected, more particularly by adherization or sticking, to one part (11, 23a ; 23, 11a) of a member fitted axially in the said annular receptacle, said member having another part (15, 15a ; 25, 25a) curved in a plane substantially perpendicular to the pulley axis and situated outside said receptacle, said curved part being connected for rotation releasably either to the pulley disc or to the shaft, the blocks of elastic material and the said members connected to said blocks forming an elastic coupling hub.

5. A mechanism according to claim 4, characterised in that the outer peripheral surface (10) of each elastic block (9) is connected to a member (12) associated with said block and releasably connected to the pulley disc (2), while the inner peripheral surfaces (22) of the elastic blocks are connected to a single member (24) forming a casing surrounding the shaft (4) and connected for rotation to said shaft, said members (12) secured to the outer surfaces of the elastic blocks projecting from the annular receptacle (8) on the axially open side thereof, while the member (24) connected to the inner surfaces (22) of said blocks projects from the receptacle on the same side.

6. A mechanism according to claim 5, characterised in that the members (12) connected to the outer surfaces (10) of the elastic blocks are in the form of metal yokes having underslung stops (13, 14) on both sides, while the member (24) connected to the inner surfaces (22) of the blocks comprises projecting lugs (29) distributed uniformly between the said stops, said lugs being flanked on both sides by elastic abutments (30, 31) adapted to co-operate with the said stops to limit the amplitude of the permissible relative rotation between the pulley and the shaft by the shearing of the elastic blocks (9).

7. A mechanism according to claim 4, characterised in that the inner peripheral surface (22a) of each elastic block (9a) is connected to a member (12a) associated with said block, the said members (12a) being connected for rotation to the hub (2a) of the pulley, said members extending through apertures (35) formed in the hub to project from the receptacle, the outer surface (10a) of the elastic blocks (9a) being connected for rotation to the inner surface of the part (23a) of a member (24a) which forms a casing connected for rotation to the shaft, said member having lugs (29a) flanked on each side by elastic abutments (30a) adapted to cooperate with stops (13a) provided on said members (12a) connected to the inner surfaces of the elastic blocks.

### Ansprüche

1. Riemenscheibenantrieb, umfassend eine Riemenscheibe (1, 1a) mit einer Radschale (2, 2a), die eine auf einer angetriebenen oder antreibenden Welle (4) frei drehbar gelagerte Buchse (3) aufweist, wohingegen elastische Verbindungsmittel (E) in Form von auf Scherung arbeitenden Blöcken (9, 9a) aus elastischem Material vorgesehen sind, um ein Drehmoment zwischen der Welle (4) und der Riemenscheibe (1, 1a) oder umgekehrt zu übertragen, wobei die äußeren Randflächen (10, 10a) und die inneren Randflächen (22, 22a) der elastischen Blöcke (9, 9a) mit der Radschale (2, 2a) der Riemenscheibe (1, 1a) bzw. der Welle (4) oder umgekehrt drehfest verbunden sind, dadurch gekennzeichnet, daß die Radschale (2, 2a) der Riemenscheibe einen konkaven Querschnitt (S) aufweist derart, daß sie einen ringförmigen Aufnahmeraum (8) bildet, der sich beiderseits der Mittelebene (P) der Riemenscheibe erstreckt und im wesentlichen zwischen denselben axialen Grenzen (L1, L2) wie die Buchse (3) liegt, welche den Aufnahmeraum (8) nach radial innen oder nach radial außen begrenzt, und daß die elastischen Verbindungsmittel (E) innerhalb des ringförmigen Aufnahmeraumes angeordnet sind.

2. Riemenscheibenantrieb nach Anspruch 1, dadurch gekennzeichnet, daß der Aufnahmeraum (8) innerhalb der axialen Dicke der Riemenscheibe (1, 1a) liegt.

3. Riemenscheibenantrieb nach einem der vorhergehenden Ansprüche, dadurch gekennzeichnet, daß der Querschnitt (S) der Radschale (2, 2a) der Riemenscheibe (1, 1a) im wesentlichen C-förmig ausgebildet ist, wobei der der Welle nächstgelegene Schenkel dieses C die Wand der Buchse bildet.

4. Riemenscheibenantrieb nach einem der vorhergehenden Ansprüche, dadurch gekennzeichnet, daß die äußere Randfläche (10, 10a) und die innere Randfläche (22, 22a) der elastischen Blöcke insbesondere durch Kleben oder Leimen mit einem Abschnitt (11, 23a ; 23, 11a) eines Eingriffsteiles verbunden sind, das in axialer Richtung in den ringförmigen Aufnahmeraum eingreift, wobei dieses Eingriffteil einen weiteren Abschnitt (15, 15a ; 25, 25a) aufweist, der in eine im wesentlichen senkrecht zur Riemenscheibenachse gerichtete Ebene umgebogen ist, außerhalb des Aufnahmeraumes liegt und in lösbarer Weise drehfest mit der Radschale der Riemenscheibe oder mit der Welle verbunden ist, wobei die Blöcke aus elastischem Material und die mit diesen Blöcken verbundenen Teile eine elastische Kupplungsnabe bilden.

5. Riemenscheibenantrieb nach Anspruch 4, dadurch gekennzeichnet, daß die äußere Randfläche (10) jedes elastischen Blockes (9) mit einem Teil (12) verbunden ist, der diesen Block zugeordnet und in lösbarer Weise mit der Radschale (2) der Riemenscheibe verbunden ist, wogegen die inneren Randflächen (22) der elastischen Blöcke mit einem einzigen Teil (24) verbunden sind, welches ein die Welle (4) umgebendes Gehäuse bildet und drehfest mit dieser Welle verbunden ist, wobei die mit den äußeren Randflächen der elastischen Blöcke verbundenen genannten Teile (12) auf der in axialer Richtung offenen Seite des ringförmigen Aufnahmeraumes (8) aus diesem herausragen während das mit den inneren Randflächen (22) der Blöcke verbundene Teil (24) nach derselben Seite aus dem Aufnahmeraum herausragt.

6. Riemenscheibenantrieb nach Anspruch 5, dadurch gekennzeichnet, daß die mit den äußeren Randflächen (10) der elastischen Blöcke verbundenen Teile (12) die Form von Metallbügeln mit zwei flach gewölbten Anschlägen (13, 14) aufweisen, wogegen das mit den inneren Randflächen (22) der Blöcke verbundene Teil (24) vorspringende Mitnehmer (29) aufweist, die gleichförmig zwischen den Anschlägen angeordnet sind, wobei die Mitnehmer auf beiden Seiten von elastischen Anschlägen (30, 31) flankiert sind, die zum Zusammenwirken mit den Anschlägen bestimmt sind, um die Amplitude der aufgrund der Scherbewegung der elastischen Blöcke (9) zulässigen relativen Drehbewegung zwischen der Riemenscheibe und der Welle zu begrenzen.

7. Riemenscheibenantrieb nach Anspruch 4, dadurch gekennzeichnet, daß die innere Randfläche (22a) jedes elastischen Blockes (9a) mit einem dem jeweiligen Block (9a) zugeordneten Teil (12a) verbunden ist, wobei diese Teile (12a) mit der Nabe (2a) der Riemenscheibe (1a) drehfest verbunden sind und Öffnungen (35) in der Nabe durchsetzen, um aus dem Aufnahmeraum heraustreten, und daß die äußere Randfläche (10a) der elastischen Blöcke (9a) mit der inneren Oberfläche eines Abschnittes (23a) eines Teiles (24a) drehfest verbunden ist, welches ein drehfest mit der Welle verbundenes Gehäuse bildet, wobei dieses Teil (24a) Mitnehmer (29a) aufweist, die auf beiden Seiten von elastischen Anschlägen (30a) flankiert sind, die zum Zusammenwirken mit den Anschlägen (13a) bestimmt sind, welche an den mit dem inneren Randflächen der elastischen Blöcke verbundenen Teilen (12a) ausgebildet sind.

Fig.1.

Fig.2.

1/2

Fig.3.

Fig.4.